# EUROPÄISCHE PATENTSCHRIFT

(11) **EP 1 291 265 B1**
(45) Veröffentlichungstag und Bekanntmachung des Hinweises auf die Patenterteilung: **05.04.2006**
(21) Anmeldenummer: 02016546.0
(22) Anmeldetag: 24.07.2002
(51) Int. Cl.: B62D 21/12, B62D 29/00, B62D 33/04

(54) **Träger für einen Fahrzeugrahmen und Fahrzeugrahmen**
Beam for a vehicle frame , and vehicle frame
Poutre de chassis de véhicule et chassis de véhicule

(30) Priorität: 08.09.2001 DE 10144213
(43) Veröffentlichungstag der Anmeldung: 12.03.2003
(73) Patentinhaber: DaimlerChrysler AG, 70567 Stuttgart (DE)
(72) Erfinder: Bächle, Erwin, 70327 Stuttgart (DE)

(56) Entgegenhaltungen:
- DE-A- 2 702 243
- GB-A- 963 042
- US-A- 3 085 816
- US-B1- 6 199 894

## Beschreibung

Die Erfindung betrifft einen Träger für einen Fahrzeugrahmen, insbesondere für ein Transportfahrzeug, wobei der Träger in Längsrichtung gesehen in wenigstens zwei Trägerteile aufgeteilt ist. Die Erfindung betrifft auch einen Fahrzeugrahmen.

Aus dem deutschen Gebrauchsmuster G 93 08 329 ist ein Nutzfahrzeugrahmen in Modulbauweise bekannt. Der Rahmen besitzt Längsträger, die aus einzelnen, miteinander verbundenen Längsträger-Abschnitten aufgebaut sind Die Verbindung erfolgt über Anschlussorgane an den Querträgern. Zur Verbindung zweier Längsträger-Abschnitte werden diese fluchtend zueinander angeordnet und jeweils mit Anschlussorganen an einem Querträger verbunden. Der Querträger überbrückt dann die Stoßfuge zwischen den Längsträger-Abschnitten.

In der DE 39 35 110 A1 ist ein Sattelauflieger für Container beschrieben. Der Sattelauflieger besitzt einen Längsrahmen bestehend aus drei Längsrahmenteilen. Dabei sind ein vorderes und ein hinteres Längsrahmenteil aus dem mittleren Längsrahmenteil teleskopartig ausziehbar. Das vordere und das hintere Längsrahmenteil besitzen jeweils eine Verzahnung, die ihrerseits in ein Zahnrad eingreifen. Dadurch sind das vordere und das hintere Längsrahmenteil miteinander gekoppelt, d.h. wird das vordere Längsrahmenteil ausgezogen dann wird auch das hintere Längsrahmenteil mit bewegt.

Aufgabe der Erfindung ist es, einen Träger für einen Fahrzeugrahmen zu schaffen, der für verschiedene Fahrzeugtypen flexibel einsetzbar ist. Außerdem soll ein Fahrzeugrahmen ein möglichst geringes Gewicht aufweisen.

Diese Aufgabe wird durch einen Träger für einen Fahrzeugrahmen mit den Merkmalen des Anspruches 1 gelöst. Weiterbildungen der Erfindung sind in den Unteransprüchen dargestellt.

Der erfindungsgemäße Träger für einen Fahrzeugrahmen zeichnet sich dadurch aus, dass die Trägerteile zueinander komplementäre Verzahnungen aufweisen und im Bereich ihrer Verzahnungen gegeneinander verspannt sind.

Die Modulbauweise, die aus der G 93 08 329 bekannt ist, kann sowohl bei den Längs- als auch bei den Querträgern des Fahrzeugrahmens angewendet werden. Bevorzugt ist jedoch ein modularer Aufbau der Längsträger, während die Querträger einstückig ausgebildet sind. Die Modulbauweise bietet den Vorteil, dass beispielsweise nicht für jeden Fahrzeugradabstand ein individueller Längsträger benötigt wird. Mit der Aufteilung, insbesondere der Längsträger in ein vorderes, mittleres und hinteres Trägerteil ist es möglich, einheitliche Komponenten z.B. bei dem vorderen und hinteren Trägerteil zu bekommen. Das mittlere Trägerteil wird jeweils um die entsprechende Radstandsverlängerung geändert.

Bisher hat sich jedoch die Verbindung der einzelnen Trägerteile als aufwendig und schwierig erwiesen. Beispielsweise wurden dabei eine Vielzahl von Schraubverbindungen benötigt. Dies bedeutete ein Mehrgewicht und eine lange Montagezeit für den Träger bzw. den Fahrzeugrahmen. Bei dem erfindungsgemäßen Träger für einen Fahrzeugrahmen wird die Verbindung in einfacher Weise über ineinandergreifende Verzahnungen der beiden Trägerteile, die gegeneinander verspannt werden, erreicht. Dadurch werden pro Trägerteil weniger Verbindungsbauteile benötigt, da der Formschluß der Verzahnungen zusätzlichen Halt bietet. Außerdem kann die Überdeckung zweier ineinandergreifender Trägerteile aufgrund der Verzahnungen deutlich geringer gehalten werden als beim Stand der Technik.

Bei einer Weiterbildung der Erfindung weisen die Trägerteile jeweils einen Trägersteg und einen über jeweils eine Biegekante mit diesem verbunden Ober- und Untergurt auf. Vorzugsweise sind die Verzahnungen sowohl am Ober- und Untergurt als auch im Bereich des Trägerstegs ausgebildet. Die Verzahnungen können beispielsweise eine Sägezahnform aufweisen, aber auch andere Verzahnungsprofile sind denkbar. Die Verzahnung ist vorzugsweise so angeordnet, dass sie am Untergurt für eine Zugbeanspruchung und am Obergurt für eine Druckbeanspruchung ausgelegt ist. Dies kann beispielsweise dadurch erreicht werden, dass bei einem Sägezahnprofil die Sägezähne am Unter- und am Obergurt in gegenläufige Richtungen weisen. Besonders bevorzugt sind die Verzahnungen auch im Bereich der Biegekante ausgebildet, und sie können spiegelsymmetrisch zur jeweiligen Biegekante ausgebildet sein. Die Verzahnungen können also außen am Ober- bzw. Untergurt beginnen und über die Biegekante bis in den senkrechten Rahmensteg bzw. Trägersteg verlaufen. Die Verzahnungen laufen im wesentlichen quer zur Längsrichtung. Bei zwei ineinandergreifenden Trägerteilen wird vorzugsweise an einem Trägerteil eine Außenverzahnung und am anderen Trägerteil eine Innenverzahnung angebracht. Beispielsweise kann dann das vordere Trägerteil mit einer Innenverzahnung über das mittlere Trägerteil mit einer Außenverzahnung geschoben werden.

Vorteilhafterweise ist eine Spannvorrichtung zum gegenseitigen Verspannen der Verzahnungen vorgesehen, die beispielsweise die Form einer Druckstrebe haben kann. Sie dient dazu, die Trägerteile im Bereich ihrer Verzahnungen miteinander zu verbinden. Damit ein sicherer Eingriff der Verzahnungen gewährleistet ist, ist vorzugsweise eines der Trägerteile in einem von der Spannvorrichtung beaufschlagten Bereich in Querrichtung relativ zu dem anderen Trägerteil elastischer ausgebildet. Dazu kann das eine Trägerteil an seinem die Verzahnung aufweisende Ende mit wenigstens einer, sich in den Trägersteg erstreckenden Ausnehmung versehen sein. Hierdurch ist sichergestellt, dass die am elastischeren Bereich angeordnete Verzahnung zuverlässig in die am anderen Trägerteil angeordnete Verzahnung eingreift. Die Ausnehmungen sind beispielsweise V-förmig ausgebildet und liegen symmetrisch zur Mittellinie des Trägerstegs, so dass sich insgesamt eine allgemein W-förmige Ausnehmung ergibt.

Um eine definierte Spannkraft auf die Verzahnungen aufzubringen, ist die Spannvorrichtung vorzugsweise relativ zu den Trägerteilen verstellbar an diesen befestigt. Die Spannvorrichtung weist vorzugsweise einen am Trägersteg befestigbaren Lagerbock und zwei in Richtung des Ober- bzw. Untergurts weisende Stützen auf. Wird also der Lagerbock in Richtung Trägersteg verstellt, spreizen sich die beiden Stützen auf, so dass die Verzahnungen aneinander gepresst werden. Vorzugsweise münden die Stützen in den Biegekanten der Trägerteile oder weisen in Richtung der Biegekanten. Dies führt dazu, dass die Spann- bzw. Stützkräfte sowohl horizontal als auch vertikal wirken. Da die Verzahnungen vorzugsweise sowohl am Trägersteg als auch an den Ober- bzw. Untergurten ausgebildet sind, führt dies zu einem Verzahnungsvorgang nicht nur im Ober- und Untergurt, sondern auch im Bereich des senkrechten Trägerstegs. Darüber hinaus wird ein Verzahnungsvorgang in der Biegekante erreicht.

Vorteilhafterweise beaufschlagen die Stützen der Spannvorrichtung wenigstens den Ober- bzw. Untergurt des einen Trägerteils und der Lagerbock ist mittels eines Gewindebolzens mit dem Trägersteg des anderen Trägerteils verbunden. Dadurch kann der Lagerbock auf den Trägersteg zu bewegt werden, wodurch sich die Stützen spreizen und die Trägerteile gegeneinander verspannt werden.

An den Stützen können Spannpratzen befestigt sein, die relativ zu den Stützen beweglich sind. Hierzu werden die Spannpratzen an den, dem Lagerbock abgewandten Enden der Stützen schwenkbeweglich befestigt. Dadurch wird eine gleichmäßige Auflage und Krafteinleitung in das Trägerteil erreicht. Vorzugsweise liegen die Spannpratzen sowohl auf dem Ober- bzw. Untergurt als auch auf dem Trägersteg auf. Eine Krafteinleitung von den Stützen in die Trägerteile kann ausschließlich über die Spannpratzen erfolgen, die Stützen können aber auch selbst auf den Trägerteilen aufliegen, so dass die Spannpratzen dann im wesentlichen eine Sicherungsfunktion haben.

Bei einer Weiterbildung der Erfindung weist zumindest ein Trägerteil einen halbhutförmigen Querschnitt auf. Mit der Umstellung des Trägerprofils von U-Form in ein halbhutförmiges Profil kann bei Beibehaltung und sogar höheren Trägheitsmomenten die Wanddicke um ca. einen Millimeter reduziert werden. Dadurch verringert sich das Längsträgergewicht um ca. 5% bis 8%.

Die der Erfindung zugrunde liegende Aufgabe wird auch durch einen Fahrzeugrahmen mit einem erfindungsgemäßen Träger gelöst. Vorteilhafterweise sind die Längsträger in jeweils ein vorderes Trägerteil, ein mittleres Trägerteil und ein hinteres Trägerteil unterteilt. Dadurch können für verschiedene Fahrzeuge mit unterschiedlichem Radstand die vorderen und hinteren Trägerteile als Gleichteile ausgebildet werden.

Die vorstehenden und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung verwirklicht sein und vorteilhafte sowie für sich schutzfähige Ausführungen darstellen können, für die hier Schutz beansprucht wird. Die Unterteilung der Anmeldung in einzelne Abschnitte beschränkt die unter diesen gemachten Aussagen nicht in ihrer allgemeinen Gültigkeit.

Ein Ausführungsbeispiel des erfindungsgemäßen Fahrzeugrahmens ist in den Zeichnungen dargestellt und wird im folgenden näher erläutert. Die Zeichnungen zeigen:
- Fig. 1: eine perspektivische Ansicht einer Verbindung zweier Trägerteile eines erfindungsgemäßen Träger eines Fahrzeugrahmens ohne Spannvorrichtung,
- Fig. 2: eine Innenansicht der Verbindung zweier Trägerteile gemäß Fig. 1,
- Fig. 3: in vergrößerter Darstellung die Einzelheit X aus Fig. 2,
- Fig. 4: in vergrößerter Darstellung die Einzelheit Y aus Fig. 2 und
- Fig. 5: eine perspektivische Ansicht der Verbindung zweier Trägerteile mit Spannverbindung.

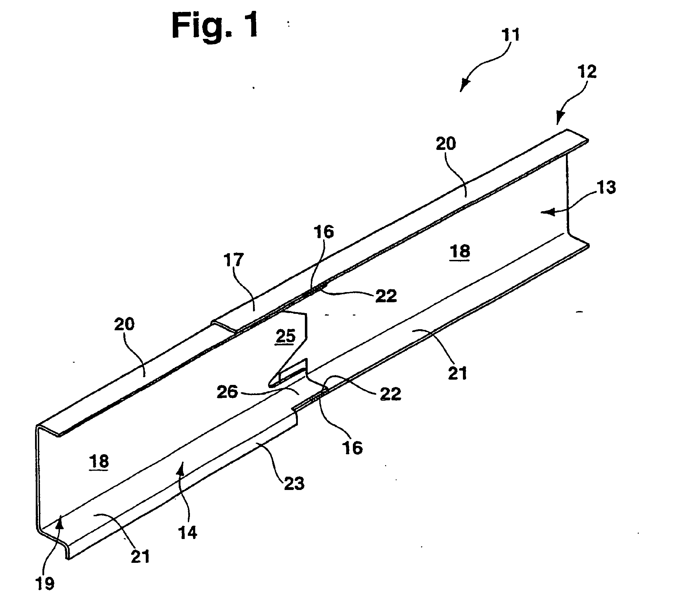

Fig. 1 zeigt in perspektivischer Darstellung einen Teil eines erfindungsgemäßen Fahrzeugrahmens 11. Im beschriebenen Ausführungsbeispiel ist dies ein Ausschnitt eines Längsträgers 12 des Fahrzeugrahmens 11. Die folgenden Ausführungen sind jedoch auch auf einen Querträger des Fahrzeugrahmens 11 anwendbar. Der Längsträger 12 ist modular aufgebaut und besteht im beschriebenen Ausführungsbeispiel aus drei Trägerteilen, die miteinander verbunden werden. Stellvertretend ist hier die Verbindung zweier Trägerteile beschrieben, nämlich eines vorderen Trägerteils 13 und eines mittleren Trägerteils 14. Die Verbindung zwischen dem mittleren Trägerteil 14 und dem hinteren Trägerteil erfolgt in gleicher Weise.

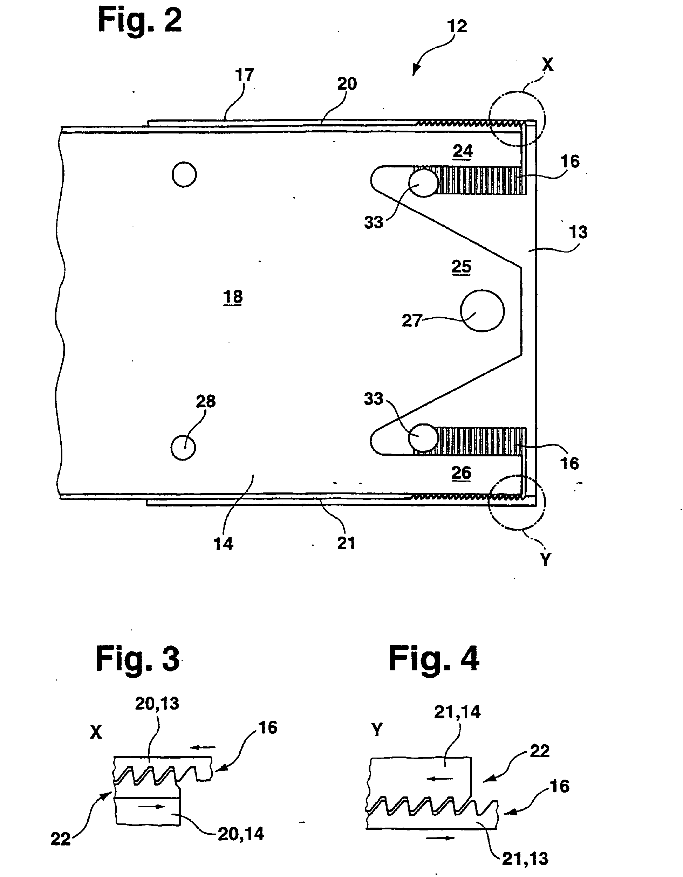

Wie insbesondere in Fig. 1 dargestellt, besitzt das vordere Trägerteil 13 einen U-förmigen Querschnitt. Das vordere Trägerteil 13 besitzt an seiner Profilinnenseite eine Verzahnung 16, deren Zähne quer zur Längsrichtung des Trägerteils 13 angeordnet sind. Die Verzahnung 16 befindet sich beim vorderen Trägerteil 13 nicht unmittelbar an einem ihrer Enden, sondern folgt auf einen endseitigen, unverzahnten Überdeckungsbereich 17. Mittels des Überdeckungsbereichs 17, der das mittlere Trägerteil 14 abschnittsweise u-förmig überdeckt, wird ein Formschluß erzielt. Die Länge des Überdeckungsbereichs 17 beträgt weniger als 250 mm. Das vordere und das mittlere Trägerteil 13, 14 besitzen einen Trägersteg 18, der über jeweils eine Biegekante 19 mit einem Ober- und Untergurt 20, 21 verbunden ist. Wie in Fig. 1 dargestellt, besitzt das vordere Trägerteil 13 somit zwei Verzahnungsbereiche, die jeweils spiegelsymmetrisch zu einer in den Biegekanten 19 liegenden winkelhalbierenden Ebene am Obergurt 20 und am Trägersteg 18 bzw. am Untergurt 21 und am Trägersteg 18 angeordnet sind. Sowohl die Verzahnung 16 am vorderen Trägerteil als auch die Verzahnung 22 am mittleren Trägerteil 14 haben im beschriebenen Ausführungsbeispiel ein Sägezahnprofil. Es sind jedoch auch andere Verzahnungsprofile denkbar. Wie in den Fig. 2, 3 und 4 dargestellt, neigen sich die Zähne der Verzahnung 16 des vorderen Trägerteils 13 am Obergurt 20 in Richtung des unverzahnten Überdeckungsbereiches 17, während die Zähne der Verzahnung 16 des vorderen Trägerteils 13 am Untergurt 21 vom Überdeckungsbereich 17 weg weisen.

Die Verzahnungen 16, 22 werden im noch nicht gebogenen Zustand des vorderen bzw. mittleren Trägerteiles 13, 14 eingestanzt. Gegebenenfalls ist nach dem Umkanten der Trägerteile 13, 14 ein Lehren der Verzahnungen 16, 22 erforderlich.

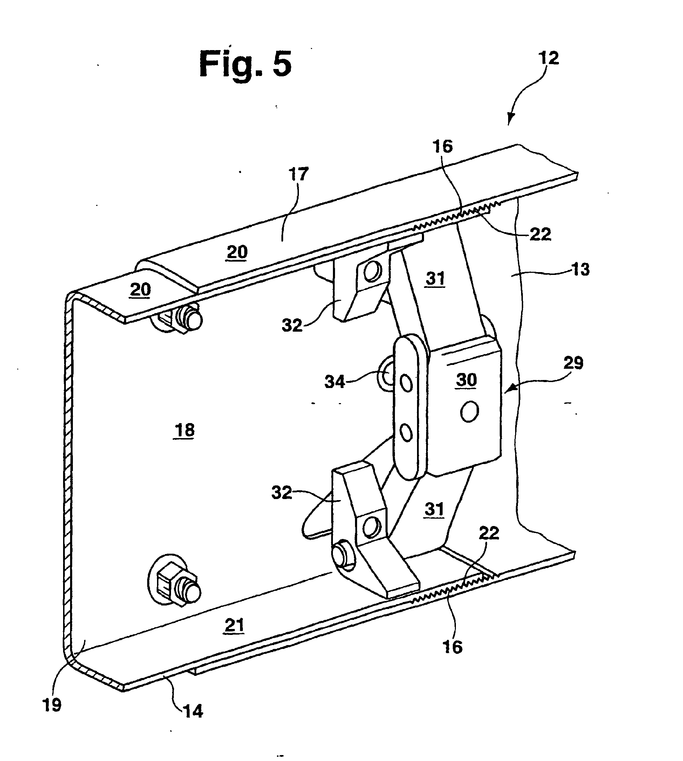

Das mittlere Trägerteil 14 besitzt, wie in Fig. 1 dargestellt, einen halbhutförmigen Querschnitt, kann aber auch, wie in Fig. 5 dargestellt, einen U-profilförmigen Querschnitt aufweisen. Das halbhutförmige Profil zeichnet sich durch eine zusätzliche Krempe 23 aus, die vom Untergurt 21 des mittleren Trägerteiles 14 abgebogen ist. Das mittlere Trägerteil 14 hat an dem Ende, auf das das vordere Trägerteil 13 aufgeschoben wird, einen W-förmigen Ausschnitt (Fig. 2). Das Ende besteht somit aus einer Obergurtlasche 24, einer trapezförmig ausgebildeten Mittellasche 25 und einer Untergurtlasche 26. Die Obergurtlasche 24 bzw. Untergurtlasche 26 umfaßt, wie in Fig. 1 und Fig. 2 dargestellt, jedoch nicht nur einen Abschnitt des Untergurts 21 bzw. Obergurts 20, sondern jeweils noch einen Teil des Trägersteges 18. Die Verzahnung 22 des mittleren Trägerteils 14 befindet sich dabei an der Außenseite der Obergurt- bzw. Untergurtlasche 24, 26. An der Mittellasche 25 befindet sich eine Bohrung 27, die fluchtend zur durchmessergleichen Bohrung am vorderen Trägerteil 13 auszurichten ist. Das mittlere Trägerteil 14 besitzt ferner zwei Befestigungsbohrungen 28, die fluchtend zu entsprechenden Befestigungsbohrungen am vorderen Trägerteil 13 auszurichten sind.

In Fig. 5 ist die Spannvorrichtung 29 dargestellt, die am vorderen und mittleren Trägerteil 13, 14 befestigt ist. Die Spannvorrichtung 29 besteht im wesentlichen aus einem T-förmigen Lagerbock 30, zwei Stützen 31 und zwei Spannpratzen 32. Eine Stütze 31 verläuft vom Lagerbock 30 aus in Richtung Obergurt 20, und die andere Stütze 31 verläuft in Richtung Untergurt 21. Der Lagerbock 30 ist mittels eines Gewindebolzens 34, der durch die Bohrung 27 in der Mittellasche 25 des mittleren Trägerteiles 14 geführt ist, in der korrespondierenden Bohrung am vorderen Trägerteil 13 befestigt und kann somit gegen den Trägersteg des vorderen Trägerteils 13 gezogen werden. Der Lagerbock 30 ist durch den Gewindebolzen 34 verstellbar zu den beiden Trägerteilen 13, 14 angeordnet. An den, dem Lagerbock 30 abgewandten Enden der Stützen 31 befindet sich jeweils eine Spannpratze 32. Die Spannpratzen 32 sind schwenkbeweglich an den Stützen 31 befestigt. Hierzu weisen die Stützen 31 an ihrem dem Lagerbock 30 abgewandten Ende jeweils einen Lagerzapfen auf, der sich in einer Richtung vom Ende des mittleren Trägerteils 14 weg erstreckt. Die Spannpratzen 32 sind jeweils mittels eines Langlochs auf die Lagerzapfen aufgeschoben, wobei eine Längsrichtung des Langlochs parallel zum Ober- bzw. Untergurt 20, 21 verläuft. Die Lagerzapfen der Stützen 31 sind parallel zum Ober- bzw. Untergurt 21 somit spielbehaftet. Die Spannpratzen 32 können über Bohrungen 33 in dem vorderen Trägerteil 13 und geeignete Befestigungsbolzen an den Trägerteilen 13, 14 befestigt werden. Die Spannpratzen 32 können die von den in den Biegekanten anliegenden Stützen bewirkte Spannfunktion unterstützen, indem sie zur Erhöhung der Spannkraft zwischen vorderen und mittleren Trägerteil 13, 14 verwendet werden. Durch die Langlochverbindung mit den Lagerzapfen der Stützen kann sichergestellt werden, dass die Spannpratzen 32 sowohl auf dem Trägersteg 18 als auch auf dem Ober- bzw. Untergurt 20, 21 des mittleren Trägerteils 14 aufliegen.

Zur Verbindung des vorderen und des mittleren Trägerteils wird zunächst das vordere Trägerteil 13 über das mittlere Trägerteil 14 geschoben, bis die beiden Verzahnungen 16, 22 ineinander greifen. Die Überdeckung der beiden Trägerteile 13, 14 wird durch den Überdeckungsbereich 17 des vorderen Trägerteiles 13 erreicht. Zur Erreichung eines optimalen fließenden Übergangs von dem mittleren Trägerteil 14 bei dem Einrasten in die Innenverzahnung des vorderen Trägerteiles 13 sind im Übergangsbereich mehrere zusätzliche Zähne an der Innenverzahnung des vorderen Trägerteiles 13 vorgehalten.

Die beiden Trägerteile 13, 14 werden mittels Schraubverbindungen an den Löchern 28 aneinander fixiert. Als nächstes wird die Spannvorrichtung 29 an den Trägerteilen 13, 14 befestigt. Dabei wird der Lagerbock 30 mittels des Gewindebolzens 34 an der Mittellasche 25 des mittleren Trägerteiles 14 und am Trägersteg 18 des vorderen Trägerteils 13 befestigt. Die Stützen 31 werden über die Spannpratzen 32 mit den beiden Trägerteilen 13, 14 verbunden.

Als nächstes folgt der Spann- bzw. Verzahnungsvorgang der beiden Trägerteile 13, 14. Durch den zentral im senkrechten Trägersteg 18 sitzenden Gewindebolzen 34 läßt sich der Lagerbock 30 in Richtung Trägersteg 18 verstellen. Diese Richtungsänderung führt zu einem Spreizen der Stützen 31 in Richtung Ober- und Untergurt 20, 21, wodurch diese in einer jeweiligen Biegekante zur Anlage kommen und eine Spannkraft aufbringen. Die beiden Trägerteile 13, 14 verzahnen sich dadurch nicht nur im Ober- und Untergurtbereich, sondern bis in den senkrechten Trägerstegbereich hinein. Dieses Verzahnen ist dadurch möglich, da durch die Anordnung der Stützen 31, die in den Biegekanten 19 münden, sehr große Kräfte sowohl horizontal als auch vertikal wirken. Diese Kräfte wirken nicht nur während der Montage, sondern bleiben auch nach dem Rahmenzusammenbau bestehen. Der Grund liegt in der zentralen Einbaulage des Gewindebolzens 34 im Trägerstegbereich. Da die Stützen 31 in der jeweiligen Biegekante an beiden Trägerteilen 13, 14 anliegen, wird beim Verstellen des Lagerbocks 30 infolge der Zugkraft durch den Gewindebolzen 34 der Trägersteg 18 nach innen, d.h. zum Lagerbock 30 hin, verbogen, bewegt sich aber immer noch im elastisches Bereich. Dadurch steht der Gewindebolzen 34 permanent unter einer Zugspannung. Die Spannpratzen 32 richten sich beim Spreizen der Stützen selbständig aus und liegen dabei sowohl am Trägersteg 18 als auch am Unter- bzw. Obergurt 21, 20 auf und tragen zur Verspannung der Verzahnungen 16, 22 bei. Dadurch wird ein mögliches Ausklinken der Verzahnungen verhindert.

Wie in den Fig. 3 und 4 dargestellt, lässt sich infolge der Verzahnungsrichtung der Obergurt auf Druck (Pfeile) beanspruchen, während der Untergurt auf Zug (Pfeile) beanspruchbar ist.

## Patentansprüche

1. Träger für einen Fahrzeugrahmen, insbesondere Längsträger für ein Transportfahrzeug, wobei der Träger in Längsrichtung gesehen in wenigstens zwei Trägerteile aufgeteilt ist, **dadurch gekennzeichnet, dass** die Trägerteile (13, 14) zueinander komplementäre, wenigstens abschnittsweise ineinander eingreifende Verzahnungen aufweisen und im Bereich ihrer Verzahnungen (16, 22) gegeneinander verspannt sind.

2. Träger für einen Fahrzeugrahmen nach Anspruch 1, **dadurch gekennzeichnet, dass** die Trägerteile (13, 14) jeweils einen Trägersteg (18) und einen über jeweils eine Biegekante (19) mit diesem verbundenen Ober- und Untergurt (20, 21) aufweisen, wobei die Verzahnungen (16, 22) sowohl am Ober- und Untergurt (20, 21) als auch im Bereich des Trägerstegs (18) ausgebildet sind.

3. Träger für einen Fahrzeugrahmen nach Anspruch 2, **dadurch gekennzeichnet, dass** die Verzahnungen 16, 22 auch im Bereich der Biegekante (19) ausgebildet sind.

4. Träger für einen Fahrzeugrahmen nach Anspruch 2 oder 3, **dadurch gekennzeichnet, dass** die Verzahnungen (16, 22) im wesentlichen spiegelsymmetrisch zur jeweiligen Biegekante (19) ausgebildet sind.

5. Träger für einen Fahrzeugrahmen nach einem der vorstehenden Ansprüche, **dadurch gekennzeichnet, dass** eine an den Trägerteilen (13, 14) befestigbare Spannvorrichtung (29) zum gegenseitigen Verspannen der Verzahnungen (16, 22) vorgesehen ist.

6. Träger für einen Fahrzeugrahmen nach einem der vorstehenden Ansprüche, **dadurch gekennzeichnet, dass** in einem von einer Spannvorrichtung (29) beaufschlagten Bereich eines der Trägerteile (14) in Querrichtung relativ zu dem anderen Trägerteil (13) elastischer ausgebildet ist.

7. Träger für einen Fahrzeugrahmen nach Anspruch 6, **dadurch gekennzeichnet, dass** das eine Trägerteil (14) an seinem die Verzahnung (22) aufweisenden Ende mit wenigstens einer sich in den Trägersteg (18) erstreckenden Ausnehmung versehen ist.

8. Träger für einen Fahrzeugrahmen nach einem der Ansprüche 5 bis 7, **dadurch gekennzeichnet, dass** die Spannvorrichtung (29) zum Aufbringen einer definierten Spannkraft auf die Verzahnungen (16, 22) relativ zu den Trägerteilen (13, 14) verstellbar ist.

9. Träger für einen Fahrzeugrahmen nach einem der Ansprüche 5 bis 8, **dadurch gekennzeichnet, dass** die Spannvorrichtung (29) einen an einem Trägersteg (18) befestigbaren Lagerbock (30) und zwei in Richtung eines Ober- bzw. Untergurts (20, 21) weisende Stützen (31) aufweist.

10. Träger für einen Fahrzeugrahmen nach Anspruch 9, **dadurch gekennzeichnet, dass** die Stützen (31) der Spannvorrichtung (29) wenigstens den Ober- bzw. Untergurt (20, 21) des einen Trägerteils 14 beaufschlagen und der Lagerbock (30) mittels eines Gewindebolzens (34) mit dem Trägersteg (18) des anderen Trägerteils (13) verbunden ist.

11. Träger für einen Fahrzeugrahmen nach einem der Ansprüche 9 oder 10, **dadurch gekennzeichnet, dass** die Stützen (31) in den Biegekanten (19) münden.

12. Träger für einen Fahrzeugrahmen nach einem der Ansprüche 9 bis 11, **dadurch gekennzeichnet, dass** an den, dem Lagerbock (30) abgewandten Enden der Stützen (31) Spannpratzen (32) schwenkbeweglich befestigt sind.

13. Träger für einen Fahrzeugrahmen nach Anspruch 12, **dadurch gekennzeichnet, dass** die Spannpratzen (32) sowohl auf dem Ober- bzw. Untergurt (20, 21) als auch auf dem Trägersteg (18) aufliegen.

14. Träger für einen Fahrzeugrahmen nach einem der vorhergehenden Ansprüche, **dadurch gekennzeichnet, dass** zumindest ein Trägerteil (13, 14) einen halbhutförmigen Querschnitt aufweist.

15. Fahrzeugrahmen, insbesondere für ein Transportfahrzeug, **gekennzeichnet durch** wenigstens einen Träger (12) nach einem der vorherstehenden Ansprüche.

16. Fahrzeugrahmen nach Anspruch 15 mit zwei Längsträgern (12), **dadurch gekennzeichnet, dass** die Längsträger (12) in jeweils ein vorderes Trägerteil (13), ein mittleres Trägerteil (14) und ein hinteres Trägerteil unterteilt sind.

## Revendications

1. Poutre pour un châssis de véhicule, en particulier longeron pour un véhicule de transport, la poutre étant divisée en au moins deux parties de poutre quand on regarde dans la direction longitudinale, **caractérisée en ce que** les parties de poutre (13, 14) présentent des dentures complémentaires entre elles, s'engrenant l'une dans l'autre au moins par segments et sont serrées l'une contre l'autre dans la zone de leur denture (16, 22).

2. Poutre pour un châssis de véhicule selon la revendication 1, **caractérisée en ce que** les parties de poutre (13, 14) comportent chacune une âme de poutre (18) et une semelle supérieure et une semelle inférieure (20, 21) reliées à celle-ci chacune par l'intermédiaire d'une arête de pliage (19), les dentures (16, 22) étant formées aussi bien sur la semelle supérieure et la semelle inférieure (20, 21) que dans la zone de l'âme de la poutre (18).

3. Poutre pour un châssis de véhicule selon la revendication 2, **caractérisée en ce que** les dentures (16, 22) sont formées aussi dans la zone de l'arête de pliage (19).

4. Poutre pour un châssis de véhicule selon la revendication 2 ou 3, **caractérisée en ce que** les dentures (16, 22) sont formées essentiellement symétriquement par rapport à l'arête de pliage (19).

5. Poutre pour un châssis de véhicule selon l'une quelconque des revendications précédentes, **caractérisée en ce qu'**un dispositif de serrage (29) pouvant être fixé sur les parties de poutre (13, 14) est prévu pour le serrage réciproque des dentures (16, 22) .

6. Poutre pour un châssis de véhicule selon l'une quelconque des revendications précédentes, **caractérisée en ce que**, dans une zone serrée par un dispositif de serrage (29), une des parties de poutre (14) est prévue plus élastique dans la direction transversale relativement à l'autre partie de poutre (13).

7. Poutre pour un châssis de véhicule selon la revendication 6, **caractérisée en ce que** la partie de poutre (14) est munie à son extrémité présentant la denture (22) d'au moins un évidement s'étendant dans l'âme de la poutre (18).

8. Poutre pour un châssis de véhicule selon l'une des revendications 5 à 7, **caractérisée en ce que** le dispositif de serrage (29) est réglable pour fournir une force de serrage définie sur les dentures (16, 22) relativement aux parties de poutre (13, 14).

9. Poutre pour un châssis de véhicule selon l'une des revendications 5 à 8, **caractérisée en ce que** le dispositif de serrage (29) présente un support de palier (30) pouvant être fixé sur une âme de poutre (18) et deux appuis (31) orientés en direction d'une semelle supérieure, respectivement d'une semelle inférieure (20, 21) .

10. Poutre pour un châssis de véhicule selon la revendication 9, **caractérisée en ce que** les appuis (31) du dispositif de serrage (29) sollicitent au moins la semelle supérieure, respectivement la semelle inférieure (20, 21) d'une partie de poutre 14 et le support de palier (30) est relié au moyen d'un boulon fileté (34) à l'âme de poutre (18) de l'autre partie de poutre (13).

11. Poutre pour un châssis de véhicule selon l'une des revendications 9 ou 10, **caractérisée en ce que** les appuis (31) débouchent dans les arêtes de pliage (19).

12. Poutre pour un châssis de véhicule selon l'une des revendications 9 à 11, **caractérisée en ce que** des pattes de serrage (32) sont fixées de manière mobile en pivotement aux extrémités des appuis (31) situées à l'opposé du support de palier (30).

13. Poutre pour un châssis de véhicule selon la revendication 12, **caractérisée en ce que** les pattes de serrage (32) reposent sur la semelle supérieure, respectivement la semelle inférieure (20, 21), ainsi que sur l'âme de la poutre (18).

14. Poutre pour un châssis de véhicule selon l'une quelconque des revendications précédentes, **caractérisée en ce qu'**au moins une partie de poutre (13, 14) présente une section transversale en forme de demi-chapeau.

15. Châssis de véhicule, en particulier pour un véhicule de transport, **caractérisé par** au moins une poutre (12) selon l'une quelconque des revendications précédentes.

16. Châssis de véhicule selon la revendication 15 comprenant deux longerons (12), **caractérisé en ce que** les longerons (12) sont divisés en une partie de longeron avant (13), une partie de longeron centrale (14) et une partie de longeron arrière.

## Claims

1. Support member for a vehicle frame, in particular longitudinal support members for a transport vehicle, which support members are split into at least two support member parts as viewed in the longitudinal direction, **characterised in that** the support member parts (13, 14) have mutually complementary toothing inter-meshing in at least certain regions and are braced against one another in the region of their toothing (16, 22).

2. Support member for a vehicle frame as claimed in claim 1, **characterised in that** the support member parts (13, 14) each have a support member web (18) and a top and bottom band (20, 21) joined by a respective bent edge (19), and the toothing (16, 22) is provided both on the top and bottom band (20, 21) and in the region of the support member web (18).

3. Support member for a vehicle frame as claimed in claim 2, **characterised in that** the toothing (16, 22) is also provided in the region of the bent edge (19).

4. Support member for a vehicle frame as claimed in claim 2 or 3, **characterised in that** the toothing (16, 22) is essentially disposed in symmetrical mirror image by reference to the respective bent edge (19).

5. Support member for a vehicle frame as claimed in one of the preceding claims, **characterised in that** a clamping device (29) is provided, which can be secured to the support member parts (13, 14) as a means of mutually bracing the toothing (16, 22).

6. Support member for a vehicle frame as claimed in one of the preceding claims, **characterised in that** one of the support member parts (14) is more elastic than the other support member part (13) in a region clamped by a clamping device (29).

7. Support member for a vehicle frame as claimed in claim 6, **characterised in that** one support member part (14) is provided with a recess extending into the support member web (18) at its end incorporating the toothing (22).

8. Support member for a vehicle frame as claimed in one of claims 5 to 7, **characterised in that** the clamping device (29) is displaceable relative to the support member parts (13, 14) in order to apply a defined clamping force to the toothing (16, 22).

9. Support member for a vehicle frame as claimed in one of claims 5 to 8, **characterised in that** the clamping device (29) has a bearing block (30) which can be secured to a support member web (18) and two braces (31) pointing in the direction of a top and bottom band (20, 21).

10. Support member for a vehicle frame as claimed in claim 9, **characterised in that** the braces (31) of the clamping device (29) clamp at least the top and bottom band (20, 21) of one support member part (14) and the bearing block (30) is connected to the support member web (18) of the other support member part (13) by means of a threaded bolt (34).

11. Support member for a vehicle frame as claimed in one of claims 9 or 10, **characterised in that** the braces (31) open into the bent edges (19).

12. Support member for a vehicle frame as claimed in one of claims 9 to 11, **characterised in that** clamping pads (32) are pivotably secured to the ends of the braces (31) remote from the bearing block (30).

13. Support member for a vehicle frame as claimed in claim 12, **characterised in that** the clamping pads (32) lie on both the top and bottom band (20, 21) as well as on the support member web (18).

14. Support member for a vehicle frame as claimed in one of the preceding claims, **characterised in that** at least one support member part (13, 14) has a cross-section in the shape of a half hat.

15. Vehicle frame, in particular for a transport vehicle, **characterised by** at least one support member (12) as claimed in one of the preceding claims.

16. Vehicle frame as claimed in claim 15 comprising two longitudinal support members (12), **characterised in that** the longitudinal support members (12) are each split into a front support member part (13), a middle support member part (14) and a rear support member part.
